# EUROPÄISCHE PATENTSCHRIFT

(11) **EP 3 523 573 B1**
(45) Veröffentlichungstag und Bekanntmachung des Hinweises auf die Patenterteilung: **15.03.2023**
(21) Anmeldenummer: 17780710.4
(22) Anmeldetag: 04.10.2017
(51) Int. Cl.: F21V 8/00

(54) **LICHTUMLENKVORRICHTUNG, BELEUCHTUNGSEINRICHTUNG UND VERWENDUNG**
LIGHT DEFLECTION DEVICE, LIGHTING DEVICE AND USE
DISPOSITIF DE DÉVIATION LUMINEUSE, DISPOSITIF D'ÉCLAIRAGE ET UTILISATION

(30) Priorität: 05.10.2016 DE 102016118884
(43) Veröffentlichungstag der Anmeldung: 14.08.2019
(73) Patentinhaber: temicon GmbH, 44263 Dortmund (DE)
(72) Erfinder: NEYER, Andreas, 58638 Iserlohn (DE); MÜLLER, Helmut Frank Ottomar, 40625 Düsseldorf (DE)
(74) Vertreter: Cohausz & Florack
(86) Internationale Anmeldenummer: PCT/EP2017/075215
(87) Internationale Veröffentlichungsnummer: WO 2018/065463

(56) Entgegenhaltungen:
- EP-A1- 2 894 396
- WO-A1-02/081844
- JP-A- H06 324 331
- US-A1- 2015 277 024
- US-A1- 2016 062 025
- US-B1- 6 425 673

## Beschreibung

Die vorliegende Erfindung betrifft eine Lichtumlenkvorrichtung, eine Beleuchtungseinrichtung und Verwendungen hiervon.

Vorrichtungen zur Lichtumlenkung für eine möglichst blendenfreie Innenbeleuchtung von Räumen sind aus dem Stand der Technik bekannt. So ist beispielsweise aus der deutschen Patentschrift DE 10 2008 055 857 B4 eine Lichtumlenkvorrichtung bekannt, welche aus einer transparenten Platte oder Folie besteht und auf einer Seite ein stabprismenförmiges Linsenprofil und auf der anderen Seite ein zylinderlinsenförmiges Linsenprofil aufweist. Die Lichtumlenkvorrichtung dient in diesem Fall zur optimierten Ausnutzung des auf eine Fensterfläche fallenden Tageslichts. Dabei ist es die Aufgabe solcher Systeme, das einfallende Tageslicht bei seitenbelichteten Räumen derart umzulenken, dass eine bessere Ausleuchtung der Raumtiefe erreicht wird. US 2015/277024 A1 offenbart eine Lichtumlenkvorrichtung nach dem Oberbegriff des Anspruchs 1.

Zwar können derartige Vorrichtungen die Ausnutzung von Tageslicht verbessern. Steht allerdings nicht genügend Tageslicht zur Verfügung, ist der Einsatz von künstlichen Lichtquellen notwendig.

Hierzu kann über den Rand eines flächigen transparenten Lichtleiters, welcher beispielsweise eine Fensterscheibe oder ein Teil hiervon sein kann, Licht eingekoppelt und mittels einer bestimmten Oberflächenstruktur flächig wieder ausgekoppelt werden. Hierzu müssen bestimmte Oberflächenstrukturen vorgesehen werden. Um die Transparenz (insbesondere bei Fensterscheiben) nicht zu beeinträchtigen und gleichzeitig eine homogene Lichtauskopplung zu erreichen, sind die Strukturen als Mikrostrukturen vorgesehen.

Dabei kann die Oberflächenstruktur zum einen dadurch erzeugt werden, dass die Oberfläche des Lichtleiters selbst modifiziert wird. Dies bedeutet aber, dass vorhandene Lichtleiter (etwa bereits vorhandene Fensterscheiben) ausgetauscht werden müssten oder zusätzliche Lichtleiter (etwa eine zusätzliche Scheibe) davorgesetzt werden müsste. Alternativ ist denkbar, dass eine Platte oder Folie auf einen an sich bereits vorhandenen Lichtleiter aufgebracht wird.

Die empfindliche Mikrostruktur muss jedoch vor Schmutz und Beschädigung (beispielsweise durch Oberflächenreinigung) geschützt werden. Dazu ist es entweder notwendig, eine weitere Schutzschicht vorzusehen, welche auf die Mikrostruktur aufgebracht wird. Alternativ ist denkbar, die Mikrostruktur zu schützen, indem der Lichtleiter mit der die Mikrostruktur aufweisenden Oberfläche in einen Zwischenraum einer Mehrfachverglasung eingebracht wird. Dies bedeutet allerdings zusätzlichen Aufwand bei der Installation.

Dokument EP 2 894 396 A1 offenbart einen Auskopplungsfilm für einen optischen Wellenleiter. Der Auskopplungsfilm ist dabei auf einer Oberfläche eines Wellenleiterkörpers des optischen Wellenleiters angeordnet und umfasst eine Basis sowie mehrere Lichtauskopplungselemente, wobei die Lichtauskopplungselemente zwischen der Basis des Auskopplungsfilms und der Oberfläche des Wellenleiterkörpers angeordnet sind.

Ausgehend von dem Vorstehenden stellt sich der Erfindung unter anderem die Aufgabe, Lichtumlenkvorrichtungen und Beleuchtungseinrichtungen vorzuschlagen, welche insbesondere eine hohe Beständigkeit bei hoher Transparenz aufweisen und trotzdem möglichst wirtschaftlich zu installieren sind.

Gemäß einem ersten Aspekt der Erfindung wird eine Lichtumlenkvorrichtung gemäß Patentanspruch 1 beschrieben.

Unter einer Mikrostruktur wird dabei insbesondere eine gezielte Struktur verstanden, deren charakteristische Dimensionen im Mikrometerbereich, das heißt im Bereich unterhalb von 1 mm, liegen. Da die Mikrostruktur für eine Lichtauskopplung sorgt, kann die Mikrostruktur auch als mikrooptische Struktur bezeichnet werden.

Die Mikrostrukturen haben beispielsweise eine Größe von etwa 50 bis 500 µm. Es hat sich gezeigt, dass im Wesentlichen kreiszylinderförmige Erhebungen effektiv zum Auskoppeln von Licht dienen können. Die Strukturelemente sind bevorzugt jeweils mit einer im Wesentlichen identischen Geometrie und/oder Dimensionierung ausgebildet. Die kreiszylinderförmigen Erhebungen haben insbesondere die Form eines geraden Kreiszylinders. Die Kreisflächen der kreiszylinderförmigen Erhebungen sind dabei vorzugsweise im Wesentlichen parallel zu der ihnen gegenüberliegenden Oberfläche des Lichtleiters bzw. der Deckschicht. Die Schnittkreisflächen können direkt auf der Oberfläche des Lichtleiters bzw. der Deckschicht aufliegen. Bevorzugt haben die kreiszylinderförmigen Erhebungen jeweils einen Durchmesser von mindestens 20 µm, weiter bevorzugt mindestens 40 µm und/oder einen Durchmesser von höchstens 200 µm, weiter bevorzugt höchstens 100 µm, beispielsweise einen Durchmesser von 50 µm. Die kreiszylinderförmigen Erhebungen haben jeweils bevorzugt eine Höhe von mindestens 20 µm, weiter bevorzugt mindestens 40 µm und/oder eine Höhe von bevorzugt höchstens 200 µm, weiter bevorzugt höchstens 100 µm, beispielsweise eine Höhe von 50 µm. Beispielsweise sind die Strukturelemente mit einem Abstand von mindestens 50 µm, bevorzugt mindestens 100 µm beabstandet. Derartige Strukturelemente können insbesondere eine transparente Lichtumlenkvorrichtung mit gleichzeitig effizienter Lichtauskopplung ermöglichen. Im Vergleich zu kegelförmigen Strukturelementen kann insbesondere eine vorteilhafte schräge Auskopplung des Lichts erfolgen.

Es ist möglich, dass die Mikrostruktur durch die Oberfläche des Lichtleiters oder durch die Oberfläche der Deckschicht ausgebildet wird.

Unter einem flächigen, transparenten Lichtleiter wird insbesondere ein Bauteil verstanden, welches Licht über eine gewisse Strecke transportieren kann. Die Lichtleitung wird dabei durch Reflexion an der Grenzfläche des Lichtleiters erreicht, beispielsweise Totalreflexion aufgrund eines geringeren Brechungsindex des den Lichtleiter umgebenden Mediums. Unter Licht wird dabei der für das Auge sichtbare Teil der elektromagnetischen Strahlung verstanden, das heißt elektromagnetische Strahlung mit Wellenlängen im Bereich von etwa 380 nm bis 780 nm oder einem Teilbereich hiervon. Der Lichtleiter kann beispielsweise eine Fensterscheibe oder eine andere Glasscheibe sein. Beispielsweise ist der Lichtleiter als eine eckige, insbesondere rechteckige Scheibe ausgebildet. Der Lichtleiter kann beispielsweise als Träger für die Deckschicht dienen.

Die zumindest bereichsweise auf den Lichtleiter flächig aufgebrachte Deckschicht ist beispielsweise in nur einem Teilbereich auf den Lichtleiter aufgebracht. Beispielsweise ist bei einer Fensterscheibe lediglich der obere Bereich (beispielsweise 1 m oder 2 m im oberen Bereich) mit der Deckschicht versehen. Die Deckschicht stellt vorzugsweise die äußerste Schicht der Lichtumlenkvorrichtung dar.

Dadurch, dass eine auf den Lichtleiter aufgebracht Deckschicht vorgesehen ist, können insbesondere bereits vorhandene Lichtleiter (welche beispielsweise keine mikrostrukturierte Oberfläche aufweisen) durch Aufbringen einer die Mikrostruktur aufweisenden Deckschicht nachgerüstet werden.

Die Lichtumlenkvorrichtung kann somit zur Lichtleitung und -umlenkung in einer Beleuchtung verwendet werden, und ermöglicht in Kombination mit einer entsprechenden Lichtquelle eine indirekte flächige Beleuchtung auch bei nicht ausreichendem, natürlichem Tageslicht. Insofern kann eine tageslicht-ergänzende Beleuchtung geschaffen werden.

Gemäß einer Alternative des ersten Aspekts ist die Mikrostruktur (vorzugsweise ausschließlich) auf der dem Lichtleiter zugewandten Oberfläche der Deckschicht ausgebildet. Die Oberfläche des Lichtleiters erfordert dann keine Mikrostruktur. Dadurch, dass die Deckschicht nun auf der dem Lichtleiter zugewandten Oberfläche eine Mikrostruktur zur Auskopplung von in den Lichtleiter eingekoppeltem Licht aufweist, wird erreicht, dass zum einen die Auskopplung wie gehabt durch eine Mikrostruktur erreicht werden kann, aber zudem die Mikrostruktur dadurch geschützt ist, dass diese nicht auf einer Außenseite, sondern auf der dem Lichtleiter zugewandten Seite vorgesehen ist. Dadurch ist die Mikrostruktur von äußeren Einflüssen geschützt. Eine zusätzliche Schutzschicht ist nicht notwendig, da die Deckschicht selbst als Schutzschicht dienen kann. Die Deckschicht kann insofern auch als Auskopplungsschicht angesehen werden.

Gemäß einer bevorzugten Ausgestaltung des ersten Aspekts ist die der Mikrostruktur gegenüberliegende Oberfläche der Deckschicht im Wesentlichen plan. Die plane Oberfläche verläuft insbesondere im Wesentlichen parallel zu den Oberflächen des flächigen Lichtleiters. Die im Wesentlichen plane Oberfläche der Deckschicht kann insbesondere eine Außenseite der Lichtumlenkvorrichtung darstellen und insofern die äußere Schutzschicht darstellen bzw. eine zusätzliche Schutzschicht verzichtbar machen.

Gemäß einer bevorzugten Ausgestaltung des ersten Aspekts besteht der Lichtleiter zumindest teilweise aus Glas oder einem Kunststoff. Ein Lichtleiter aus Glas weist eine hohe Härte und Beständigkeit auf. Zudem wird Glas bereits in vielen Bauelementen, wie beispielsweise Fenstern oder Vitrinen ohnehin eingesetzt. Derartige Lichtleiter können durch Aufbringen der Deckschicht einfach mit einer Mikrostruktur versehen werden. Lichtleiter aus Kunststoff können ebenfalls eine hohe Beständigkeit aufweisen. Beispiele für einen Kunststoff sind Polymethylmethacrylat (PMMA), Polysiloxan, etwa Polydimethylsiloxan (PDMS), Polycarbonat (PC), Cycloolefincopolymer (COC) oder Polyurethan (PU).

Grundsätzlich kann die Deckschicht als Platte oder Tafel ausgebildet sein. Gemäß einer bevorzugten Ausgestaltung der unterschiedlichen Aspekte ist die Deckschicht jedoch als Folie ausgebildet. Unter einer Folie wird insbesondere ein dünnes Blatt (insbesondere mit einer Dicke kleiner als 1 mm) aus dem jeweiligen Material (zum Beispiel Kunststoff oder Dünnglas) verstanden. Beispielsweise lässt sich die Folie aufwickeln. Dies hat insbesondere den Vorteil, dass die Deckschicht als Rolle einfach transportiert werden kann und beispielsweise auch erst vor Ort aufgebracht werden kann. Vorteilhaft weist die Folie jedoch weiterhin eine ausreichende Festigkeit auf, um beispielsweise als äußere Schicht die Funktion einer Schutzschicht zu erfüllen.

Gemäß einer bevorzugten Ausgestaltung des ersten Aspekts weist der Lichtleiter eine Dicke von mindestens 1 mm, bevorzugt mindestens 2 mm, weiter bevorzugt mindestens 3 mm und/oder eine Dicke von höchstens 15 mm, bevorzugt höchstens, 10 mm, weiter bevorzugt höchstens 8 mm auf. Bei diesen Mindestdicken kann eine ausreichende Stabilität der Lichtumlenkvorrichtung erreicht werden und ein Einkoppeln des Lichts erreicht werden.

Gemäß einer bevorzugten Ausgestaltung des ersten Aspekts besteht die Deckschicht zumindest teilweise aus Glas oder einem Kunststoff. Es hat sich gezeigt, dass Ausgestaltungen der erfindungsgemäßen Deckschicht vorteilhaft aus Glas oder einem Kunststoff hergestellt werden können. Ein Kunststoff hat sich insbesondere bei der Ausbildung der Deckschicht als Folie als vorteilhaft gezeigt. Ein Kunststoff kann insbesondere ein transparentes, thermoplastisches Material sein. Der Kunststoff ist beispielsweise Polymethylmethacrylat (PMMA), Polysiloxan, etwa Polydimethylsiloxan (PDMS), Polycarbonat (PC), Cycloolefincopolymer (COC) oder Polyurethan (PU). Ebenfalls ist jedoch denkbar, dass die Deckschicht aus einem transparenten Epoxidharz oder Acrylat hergestellt wird. Ebenfalls kann die Deckschicht jedoch aus Glas, insbesondere Dünnglas einer hergestellt sein.

Gemäß einer bevorzugten Ausgestaltung des ersten Aspekts weist die Deckschicht eine Dicke von höchstens 1000 µm, bevorzugt höchstens 500 µm, weiter bevorzugt höchstens 300 µm und/oder eine Dicke von mindestens 50 µm, bevorzugt mindestens 100 µm, weiter bevorzugt mindestens 150 µm auf.

Unter der Dicke der Deckschicht ist insbesondere die Dicke inklusive der Mikrostruktur zu verstehen. Es hat sich gezeigt, dass auch eine Deckschicht, dessen Mikrostruktur aufweisende Oberfläche auf den Lichtleiter aufgebracht ist, vergleichsweise dünn ausgebildet werden kann und zudem eine ausreichende Schutzfunktion ausüben kann.

Gemäß einer bevorzugten Ausgestaltung des ersten Aspekts ist die Deckschicht stoffschlüssig mit dem Lichtleiter verbunden. Beispielsweise ist die Deckschicht auf den Lichtleiter laminiert, auf den Lichtleiter geklebt oder mit dem Lichtleiter verschweißt. Im Falle des Verklebens ist vorzugsweise ein möglichst transparenter Klebstoff zu verwenden, welcher eine möglichst geringe Streuung des Lichts verursacht.

Gemäß dem ersten Aspekt sind die Strukturelemente derart ausgebildet, dass in den Lichtleiter eingekoppeltes Licht im Wesentlichen über die Zylindermantelflächen der Strukturelemente ausgekoppelt wird. So kann ein möglichst großer Teil des Lichts kontrolliert aus dem Lichtleiter ohne oder nur mit geringem Lichtverlust ausgekoppelt werden.

Gemäß dem ersten Aspekt ist der durch die Höhe und die Querschnittsdiagonale der Strukturelemente eingeschlossene Winkel kleiner oder gleich dem Grenzwinkel der Totalreflexion in dem Lichtleiter und/oder der Deckschicht. Unter einem Grenzwinkel der Totalreflexion wird der Einfallswinkel verstanden, bei dessen Überschreitung an der Grenzfläche zweier (im Idealfall nicht absorbierender) Medien mit verschieden großer Ausbreitungsgeschwindigkeit eine Totalreflexion stattfindet. So kann ein möglichst großer Teil des Lichts kontrolliert aus dem Lichtleiter ausgekoppelt werden, da auf diese Weise die Seitenwand der kreiszylinderförmigen Strukturelemente zur Lichtauskopplung effektiv ausgenutzt wird.

Gemäß einer bevorzugten Ausgestaltung des ersten Aspekts weisen die Strukturelemente der Mikrostruktur eine im Wesentlichen konstante Anordnungsdichte auf. Dabei können die Strukturelemente regelmäßig oder stochastisch verteilt angeordnet sein. Durch eine im Wesentlichen konstante Anordnungsdichte kann die Mikrostruktur besonders wirtschaftlich hergestellt werden. Auch für ein Aufbringen der Deckschicht auf den Lichtleiter ist die Fehleranfälligkeit in Bezug auf eine Fehlpositionierung reduziert.

Gemäß einer bevorzugten Ausgestaltung des ersten Aspekts weist ein der Einkopplung dienender Rand des Lichtleiters eine Oberflächenmodifikation auf. Durch eine Oberflächenmodifikation eines Rands des Lichtleiters kann die Effizienz beim Einkoppeln des Lichts in den Lichtleiter erhöht werden. Dabei kann die Oberflächenmodifikation durch den Rand des Lichtleiters selbst oder durch ein auf den Rand aufgebrachtes Element erzielt werden. Unter einer Oberflächenmodifikation wird im Wesentlichen verstanden, dass die Oberfläche derart modifiziert ist, dass gezielt eine optische Eigenschaft bereitgestellt werden kann.

Die Oberflächenmodifikation umfasst beispielsweise eine Oberflächenstrukturierung des Randes. Beispielsweise umfasst die Oberflächenmodifikation eine Mottenaugenstruktur. Beispielsweise umfasst die Oberflächenmodifikation ein (aufgebrachtes) Beugungsgitter, sodass ein Umlenken des aus einem bestimmten Winkelbereich einfallenden Lichts erreicht wird. Beispielsweise umfasst die Oberflächenmodifikation eine konvexe oder prismatische Formung des Rands des Lichtleiters. Beispielsweise umfasst die Oberflächenmodifikation einen Zylinderlinsen-Array oder ein Prismen-Array.

Im Ergebnis können durch einzelne Ausgestaltungen die Reflexionsverluste reduziert werden, sodass eine effiziente Einkopplung des Lichts erreicht wird. Ebenfalls können Ausgestaltungen erreichen, dass eine unbeabsichtigte Überschreitung des Grenzwinkels der Totalreflexion reduziert wird. Ebenfalls können Ausgestaltungen erreichen, dass ein Einkoppeln von Licht parallel zu den flächigen Oberflächen des Lichtleiters reduziert wird.

Die beschriebene Strukturierung kann auch an dem Rand des Lichtleiters gegenüberliegend dem der Einkopplung dienenden Rand vorgesehen sein insbesondere in Kombination mit einer Verspiegelung.

Gemäß einer bevorzugten Ausgestaltung des ersten Aspekts ist die Mikrostruktur mittels Profilwalzen, insbesondere mittels UV-Prägen mittels einer Prägewalze hergestellt. Dabei kann die Mikrostruktur mittels entsprechend geformter Walzen zum Beispiel in das noch weiche Kunststoffmaterial eingeformt werden. Es hat sich gezeigt, dass mittels UV-Prägens mittels einer Prägewalze die Deckschicht zuverlässig als vergleichsweise dünne Schicht oder Folie (insbesondere in der Größenordnung von 200 µm und darunter) hergestellt werden kann. Ein beispielhaftes UV-Prägeverfahren mittels Prägewalze kann insbesondere als "Roll-to-Roll"-Verfahren ausgebildet sein. Dabei kann ein (unstrukturierter) Träger (Filmträger) auf einer Rolle zur Verfügung gestellt werden und in einem kontinuierlichen Verfahren mit der Mikrostruktur versehen werden und anschließend wieder aufgerollt werden. Die Prägewalze kann durch einen photolithographischen oder diamantzerspanenden Prozess strukturiert werden, sodass die Prägewalze die Negativstruktur der zu erzeugenden Mikrostruktur aufweist. Beispielsweise erfolgt das Prägen der Mikrostruktur mit der Walze in eine auf dem Träger vorhandene Lackschicht und gleichzeitigem oder anschließendem UV-Härten.

Ebenfalls ist jedoch denkbar, dass ein UV-Prägen auf starren Trägern erfolgt. Dabei wird beispielsweise eine Masterfolie verwendet, welche die Negativstruktur der Mikrostruktur aufweist, und auf eine UV-Lackschicht auf einem starren Träger eingeprägt.

Weiterhin ist denkbar, eine Mikrostruktur aufweisende Deckschicht in Form einer Platte oder Folie mittels Extrusionstechnik durch entsprechend profilierte Düsen, die Heißprägetechnik (sogenanntes "Plate-to-Plate"-Verfahren) oder die Gießtechnik herzustellen.

Gemäß einem zweiten Aspekte der Erfindung wird eine Beleuchtungseinrichtung beschrieben, umfassend: eine Lichtumlenkvorrichtung gemäß dem ersten Aspekt der Erfindung, und eine an einem Rand des Lichtleiters angeordnete Beleuchtungsquelle zur Einkopplung von Licht über den Rand des Lichtleiters.

Die Beleuchtungseinrichtung kann beispielsweise als transparentes, scheibenförmiges Beleuchtungselement angesehen werden. Unter einer Beleuchtungsquelle wird dabei zumindest eine Beleuchtungsquelle verstanden. Eine Beleuchtungsquelle kann beispielsweise eine oder mehrere Lichtquellen aufweisen, beispielsweise eine oder mehrere Leuchtdioden (LED). Beispielsweise kann eine Leiste aus mehreren Lichtquellen (beispielsweise mehreren LED) entlang des Rands des Lichtleiters angeordnet sein. Beispielsweise sind Leuchtdioden für rotes, grünes, blaues und/oder weißes Licht vorgesehen. Beispielsweise ist zumindest eine Beleuchtungsquelle zur Erzeugung von Licht mit einer Farbtemperatur Bereich von 5000 K -6500 K (Kaltweiß) und/oder 3000 K - 4000 K (Warmweiß) ausgebildet. Beispielsweise ist zumindest eine Beleuchtungsquelle zur Erzeugung von Licht mit einer Beleuchtungsstärke von mehr als 500 lx, bevorzugt mehr als 1000 lx, ausgebildet. Diese (hohe) Farbtemperatur und/oder diese (hohe) Beleuchtungsstärke können vorteilhaft Tageslicht simulieren und beispielsweise eine Unterdrückung des Schlafhormons Melatonin bewirken.

Das Licht einer an einem Rand des Lichtleiters angeordneten Beleuchtungsquelle kann insbesondere eine schräg (beispielsweise zwischen 0° und 90°, vorzugsweise zwischen 20° und 70°, weiter vorzugsweise zwischen 30 und 50°, beispielsweise in etwa 40°) zum flächigen Lichtleiter liegende Abstrahlrichtung aufweisen. Je nach Rand, an dem die Beleuchtungsquelle angeordnet ist und wie die Beleuchtungseinrichtung im Raum angeordnet ist, kann dann die Abstrahlrichtung beispielsweise nach schräg unten, nach schräg oben, oder schräg zur Seite erreicht werden.

Gemäß einer Ausgestaltung des zweiten Aspekts weisen die Strukturelemente der Mikrostruktur zumindest bereichsweise eine mit zunehmendem Abstand von zumindest einer Beleuchtungsquelle im Wesentlichen zunehmende Anordnungsdichte auf. Grundsätzlich sollte das eingekoppelte Licht möglichst bei einer Passage des Lichtleiters ausgekoppelt werden. Die vorgeschlagene Ausgestaltung kann die Ausbeute des ausgekoppelten Lichts erhöhen und dabei eine hohe Homogenität der Lichtabstrahlung erreichen. Ist beispielsweise an zwei gegenüberliegenden Rändern jeweils eine Beleuchtungsquelle vorgesehen, wäre es vorteilhaft die höchste Anordnungsdichte in der Mitte zwischen den beiden Beleuchtungsquellen vorzusehen.

Gemäß einer Ausgestaltung des zweiten Aspekts ist die Beleuchtungsquelle zumindest bereichsweise auf den Rand des Lichtleiters aufgebracht. Die Beleuchtungsquelle ist also insbesondere (zumindest teilweise) nicht beabstandet von dem Rand des Lichtleiters. Beispielsweise ist die Beleuchtungsquelle (beispielsweise eine Leuchtdiode) stoffschlüssig mit dem Rand verbunden. Dies kann insbesondere Verluste beim Einkoppeln des Lichts reduzieren. Alternativ kann die Beleuchtungsquelle auch beabstandet (beispielsweise mit einem Luftspalt) an dem Rand angeordnet sein. Dies kann vorteilhaft sein, um durch gezielte Lichtbrechung eine höhere Einkopplungseffizienz zu erreichen.

Gemäß einer Ausgestaltung des zweiten Aspekts umfasst die Beleuchtungseinrichtung: eine erste an einem ersten Rand des Lichtleiters angeordnete Beleuchtungsquelle zur Einkopplung von Licht über den ersten Rand des Lichtleiters, und eine zweite an einem zweiten Rand des Lichtleiters angeordnete Beleuchtungsquelle zur Einkopplung von Licht über den zweiten Rand des Lichtleiters.

Das Vorsehen von einer erste und einer zweiten Beleuchtungsquelle an verschiedenen Rändern ermöglicht eine flexible Raumbeleuchtung durch die Beleuchtungseinrichtung. Beispielsweise weist die erste Beleuchtungsquelle eine andere Abstrahlcharakteristik (beispielsweise in Bezugs auf die Helligkeit und/oder Farbtemperatur der Beleuchtungsquelle) auf als die zweite Beleuchtungsquelle. Beispielsweise kann durch eine am oberen Rand des Lichtleiters angeordnete Beleuchtungsquelle Licht mit einer Farbtemperatur Bereich von 5000 K - 6500 K (Kaltweiß) oder 3000 K - 4000 K (Warmweiß) und hoher Beleuchtungsstärke (z.B. 1000 lx) schräg nach unten abgestrahlt werden (beispielsweise für die Tischbeleuchtung). Alternativ oder zusätzlich kann durch eine am unteren Rand des Lichtleiters angeordnete Beleuchtungsquelle helles, kaltes Licht (5000 K - 6500 K) schräg nach oben (beispielsweise für die Raumbeleuchtung) abgestrahlt werden.

Um die Anpassungsfähigkeit und Flexibilität der Beleuchtungseinrichtung weiter zu verbessern, weist die Beleuchtungseinrichtung vorzugsweise eine dritte an einem dritten Rand des Lichtleiters angeordnete Beleuchtungsquelle zur Einkopplung von Licht über den dritten Rand des Lichtleiters auf. Weiterhin kann die Beleuchtungseinrichtung eine vierte an einem vierten Rand des Lichtleiters angeordnete Beleuchtungsquelle zur Einkopplung von Licht über den vierten Rand des Lichtleiters umfassen. Insbesondere bei rechteckigen Lichtleitern, welche beispielsweise in oder als Teil eines Fensters zum Einsatz kommen, ermöglicht dies eine hohe Beleuchtungsflexibilität.

Gemäß einem dritten Aspekt der Erfindung wird zudem eine Verwendung einer Lichtumlenkvorrichtung gemäß dem ersten Aspekt oder einer Beleuchtungseinrichtung gemäß dem zweiten Aspekt für ein raumbildendes Bauelement, insbesondere ein Fenster, eine Trennwand, eine Brüstung oder ein Deckenelement, oder für eine Raumleuchte beschrieben.

Es hat sich gezeigt, dass die beschriebene Lichtlenkvorrichtung und die beschriebene Beleuchtungseinrichtung sich zur Verwendung in den beschriebenen Bauelementen oder Raumleuchten oder als die beschriebenen Bauelemente oder Raumleuchten eignen, da bei derartigen Einsatzzwecken in der Regel eine hohe Beständigkeit bei wirtschaftlicher Montage gefordert wird und zudem eine hohe Effizienz und Anpassungsfähigkeit der Beleuchtung erwartet wird.

Als Fenster kommt insbesondere ein Mehrscheibenisolierglas (MIG) in Betracht. Der Lichtleiter kann dann beispielsweise eine der Scheibe des Mehrscheibenisolierglases sein oder in einen Zwischenraum des Mehrscheibenisolierglases angeordnet werden. Auch kann die Beleuchtungseinrichtung vor einem Fenster (beispielsweise von innen) oder hinter einem Fenster (beispielsweise von außen) angebracht werden. Dabei kann die Deckschicht als äußere Schutzschicht dienen.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Aspekte als offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

In der Zeichnung zeigt
- Fig. 1a,b: eine Schnittdarstellung eines Ausführungsbeispiels einer erfindungsgemäßen Beleuchtungseinrichtung umfassend ein Ausführungsbeispiel einer erfindungsgemäßen Lichtumlenkeinrichtung;
- Fig. 2: eine Schnittdarstellungen eines alternativen Ausführungsbeispiels einer erfindungsgemäßen Lichtumlenkeinrichtung;
- Fig. 3: Schnittdarstellungen unterschiedlicher Ausführungsbeispiele zur Veranschaulichung unterschiedlicher Lichteinkopplungen in einen Lichtleiter;
- Fig. 4: eine vergrößerte Schnittansicht eines Ausführungsbeispiels einer erfindungsgemäßen Mikrostruktur;
- Fig. 5: eine perspektivische Darstellung einer Ausgestaltung der beispielhaften Beleuchtungseinrichtung aus Fig. 1; und
- Fig. 6: eine Darstellung einer beispielhaften Verwendung der beispielhaften Beleuchtungseinrichtung aus Fig. 1.

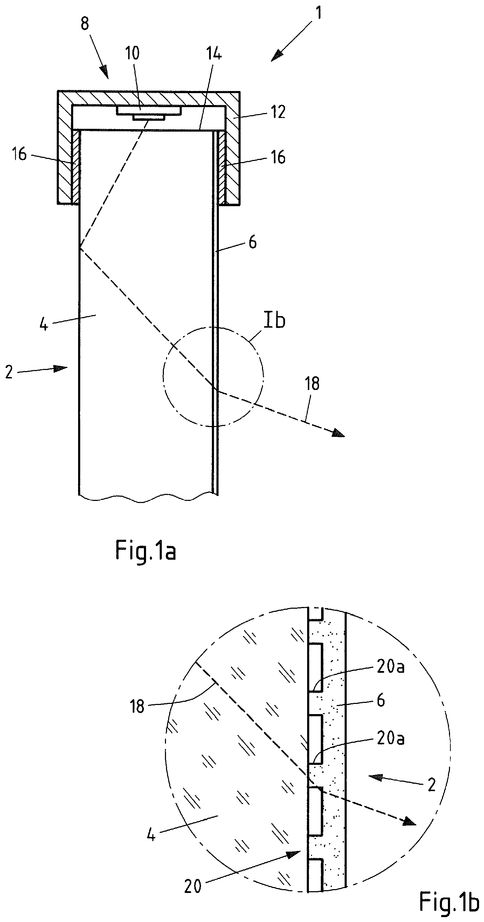

Fig. 1a zeigt zunächst eine Schnittdarstellung eines Ausführungsbeispiels einer erfindungsgemäßen Beleuchtungseinrichtung 1 umfassend ein Ausführungsbeispiel einer erfindungsgemäßen Lichtumlenkeinrichtung 2. Die Lichtumlenkeinrichtung 2 umfasst einen flächigen, transparenten Lichtleiter 4 und eine zumindest bereichsweise auf den Lichtleiter 4 flächig aufgebrachte, transparente Deckschicht 6. Der Lichtleiter 4 kann beispielswiese aus Glas oder einem transparenten Kunststoff bestehen. Auch die Deckschicht 6 kann beispielsweise aus Glas oder einem transparenten Kunststoff bestehen. Die Beleuchtungseinrichtung 1 weist zudem eine Beleuchtungsquelle 8 umfassend zumindest eine Leuchtdiode 10 auf. Die Beleuchtungsquelle 8 ist mittels einer Halterung 12 an einem Rand 14 des Lichtleiters 4 zur Einkopplung von Licht über den Rand 14 des Lichtleiters 4 angeordnet. Um zu verhindern, dass im Bereich der Halterung 12 Licht ausgekoppelt wird bzw. um zu erreichen, dass ausgekoppeltes Licht wieder eingekoppelt wird, ist im Bereich der Halterung 12 eine Verspiegelung 16 vorgesehen. Ein beispielhafter Verlauf eines Lichtstrahls 18, welcher ausgehend von der Leuchtdiode 10 in den Lichtleiter 4 eingekoppelt wird, einmal totalreflektiert wird und dann über die Deckschicht 6 ausgekoppelt wird, ist ebenfalls dargestellt.

Fig.1b zeigt eine vergrößerte Schnittdarstellung des Bereichs der separaten Deckschicht 6 aus Fig. 1a. Die Mikrostruktur ist zwischen dem Lichtleiter 4 und der als Auskopplungsschicht dienenden Deckschicht 6 gebildet. Hierzu weist die Deckschicht 6 auf der dem Lichtleiter 4 zugewandten Oberfläche eine Mikrostruktur 20 zur Auskopplung von in den Lichtleiter 4 eingekoppeltem Licht auf. Die der Mikrostruktur 20 gegenüberliegende Oberfläche der Deckschicht 6 ist im Wesentlichen plan. Ist die Deckschicht 6 als Folie ausgebildet, kann diese einfach transportiert und auf den Lichtleiter 4 aufgebracht werden. Die Deckschicht 6 ist dabei stoffschlüssig mit dem Lichtleiter 4 verbunden, zum Beispiel auf diesen laminiert oder geklebt.

Die Mikrostruktur 20 weist eine Vielzahl von Strukturelementen 20a auf, welche als kreiszylinderförmige Erhebungen ausgebildet sind. Im Bereich der Kreisschnittflächen der Erhebungen 20a liegt die Deckschicht 6 auf dem Lichtleiter 4 auf bzw. ist mit diesem verbunden. Ebenfalls ist in Fig. 1b der beispielshafte Lichtstrahl 18 dargestellt, welcher aufgrund eines der Strukturelemente 20a ausgekoppelt wird. In diesem Fall weisen die die Strukturelemente 20a der Mikrostruktur 20 eine im Wesentlichen konstante Anordnungsdichte auf. Es ist jedoch auch denkbar, dass die Strukturelemente 20a der Mikrostruktur 20 zumindest bereichsweise eine mit zunehmendem Abstand von der Beleuchtungsquelle 8 im Wesentlichen zunehmende Anordnungsdichte aufweisen, der Abstand der Strukturelemente also mit zunehmendem Abstand von der Beleuchtungsquelle 8 kleiner wird. Die Mikrostruktur 20 ist keiner Gefahr von Verschmutzung oder Beschädigung ausgesetzt, da lediglich die der Mikrostruktur 20 gegenüberliegend plane Oberfläche der Deckschicht 6 der Umgebung ausgesetzt ist.

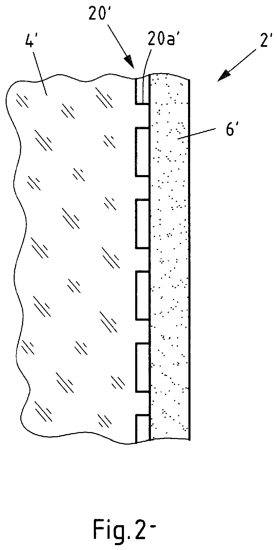

Fig. 2a zeigt eine Schnittdarstellung eines alternativen Ausführungsbeispiels einer erfindungsgemäßen Lichtumlenkvorrichtungen 2', welche jedoch wie die Lichtumlenkvorrichtung 2 eingesetzt und ausgestaltet werden kann. Bei der Lichtumlenkvorrichtung 2' ist die Mikrostruktur nicht durch eine Deckschicht, welche die Mikrostruktur auf der dem Lichtleiter zugewandten Oberfläche aufweist, vorgesehen, sondern durch den Lichtleiter 4'.

Bei der Lichtumlenkvorrichtung 2' wird die Mikrostruktur 20' mit den Erhebungen 20a' durch die Oberfläche des Lichtleiters 4' bereitgestellt. Um die Mikrostruktur zu schützen ist eine separate Deckschicht 6 vorgesehen, welche auf den Kreisschnittflächen aufliegt.

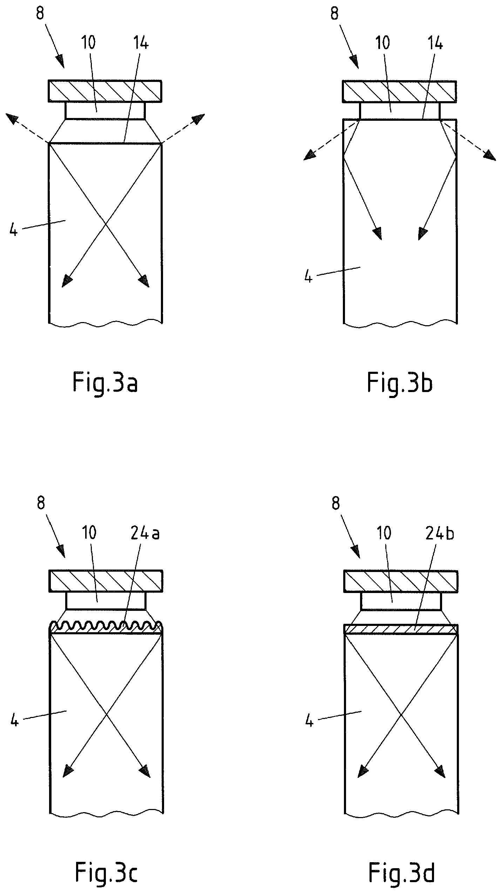

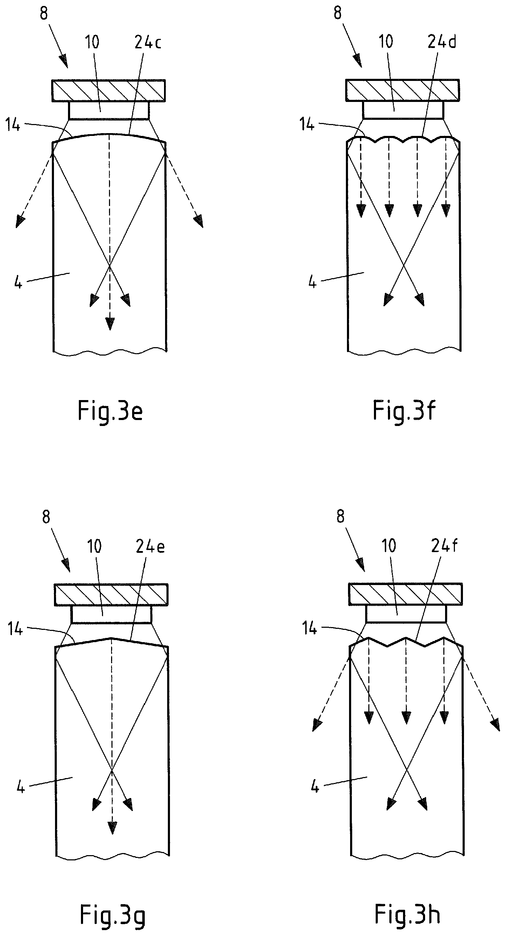

Fig. 3 zeigt Schnittdarstellungen unterschiedlicher Ausführungsbeispiele zur Veranschaulichung unterschiedlicher Lichteinkopplungen in einen Lichtleiter.

In Fig. 3a zeigt zunächst einen Rand 14 eines Lichtleiters 4, wobei die Leuchtdiode 10 der Beleuchtungsquelle 8 von dem Rand 14 beabstandet ist. Die beispielhaft eingezeichneten Lichtstrahlen veranschaulichen, dass zwar ein Teil des Lichts eingekoppelt wird, allerdings auch ein Teil des Lichts unerwünscht reflektiert wird.

Fig. 3b zeigt ein Ausführungsbeispiel, bei dem die Beleuchtungsquelle 8 mit der Leuchtdiode 10 zumindest bereichsweise auf den Rand 14 des Lichtleiters 4 direkt aufgebracht ist. Dadurch können unerwünschte Reflexionen vermieden werden. Licht, welches nicht totalreflektiert wird, kann beispielsweise mittels der in Fig. 1a dargestellten Verspiegelung 16 wieder in den Lichtleiter 4 zurückreflektiert werden.

Fig. 3c zeigt eine Oberflächenmodifikation des Rands 14 des Lichtleiters 4 in Form einer auf dem Rand 14 angeordneten Mottenaugenstruktur 24a, während Fig. 3d eine Oberflächenmodifikation des Rands 14 des Lichtleiters 4 in Form eines auf dem Rand 14 angeordneten Beugungsgitters 24b zeigt. Hierdurch können insbesondere unerwünschte Reflexionen vermieden oder verringert werden.

Fig. 3e zeigt eine konvexe Formung 24c des Randes 14 des Lichtleiters 4, während Fig. 3f einen als Zylinderlinsen-Array 24d geformten Rand 14 zeigt. Fig. 3e zeigt eine prismatische Formung 24e des Randes 14 des Lichtleiters 4, während Fig. 3f einen als Prismen-Array 24f geformten Rand 14 zeigt. Hierdurch kann insbesondere ein Überschreiten des Grenzwinkels der Totalreflexion von dem eingekoppelten Licht in dem Lichtleiter vermieden oder verringert werden.

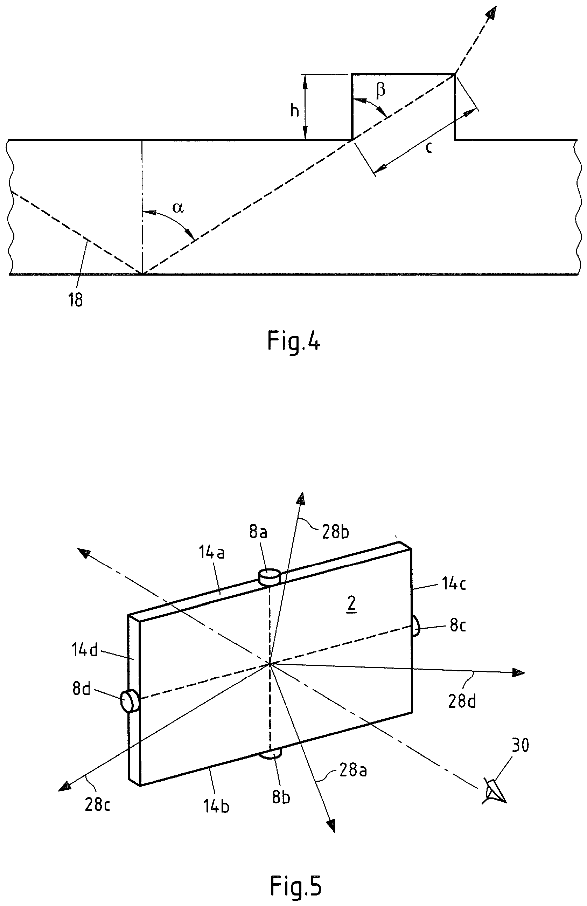

Fig. 4 zeigt eine vergrößerte Schnittansicht eines Ausführungsbeispiels einer erfindungsgemäßen Mikrostruktur, wie sie in den Ausführungsbeispielen der Fig. 1 oder 2 zum Einsatz kommen kann. In Fig. 4 ist veranschaulicht, wie ein in einen Lichtleiter eingekoppeltes Licht an einem kreiszylinderförmigen Strukturelement 20a einer Mikrostruktur 20 ausgekoppelt wird. In diesem Fall wird die Mikrostruktur 20 durch die Oberfläche des Lichtleiters bereitgestellt. Das Beispiel kann jedoch auch auf die Lichtumlenkvorrichtung 2 mit der Deckschicht 6 aus Fig. 1b übertragen werden. Der beispielhaft dargestellte Lichtstrahl 18 wird zunächst totalreflektiert, in diesem Beispiel unter dem Grenzwinkel α. Anschließend propagiert der Lichtstrahl durch das kreiszylinderförmige Strukturelement 20a der Mikrostruktur. Der durch die Höhe h und die Querschnittsdiagonale c des Strukturelements 20a eingeschlossene Winkel β des durch h, c und die Kreisschnittfläche gebildeten Dreiecks ist kleiner oder gleich dem Grenzwinkel α der Totalreflexion in dem Lichtleiter. Ein Auftreffen des Lichtstrahls auf die Kreisschnittfläche, was eine Totalreflexion und eine unkontrollierte Auskopplung zur Folge hätte, wird vermieden. In diesem Fall verläuft der Lichtstrahl 18 entlang der Querschnittsdiagonalen und wird anschließend ausgekoppelt.

Fig. 5 zeigt eine perspektivische Darstellung einer Ausgestaltung der beispielhaften Beleuchtungseinrichtung 1. Wie zu erkennen ist, weist die Beleuchtungseinrichtung 1 in diesem Fall neben der Lichtumlenkvorrichtung 2 insgesamt vier

Beleuchtungsquellen 8a, 8b, 8c, 8d auf. Dabei ist an jedem der vier Ränder 14a, 14b, 14c, 14d des Lichtleiters 4 eine Beleuchtungsquelle 8a, 8b, 8c, 8d zur Einkopplung von Licht über den jeweiligen Rand des Lichtleiters angeordnet. Dadurch kann unabhängig voneinander Licht in die vier schräg zum Lichtleiter liegenden Richtungen 28a, 28b, 28c, 28d ausgekoppelt werden. Durch die Beleuchtungseinrichtung 1 kann somit eine Beleuchtung bereitgestellt werden, während gleichzeitig ein Benutzer 30 durch die Lichtumlenkvorrichtung 2 der Beleuchtungseinrichtung 1 hindurchschauen kann.

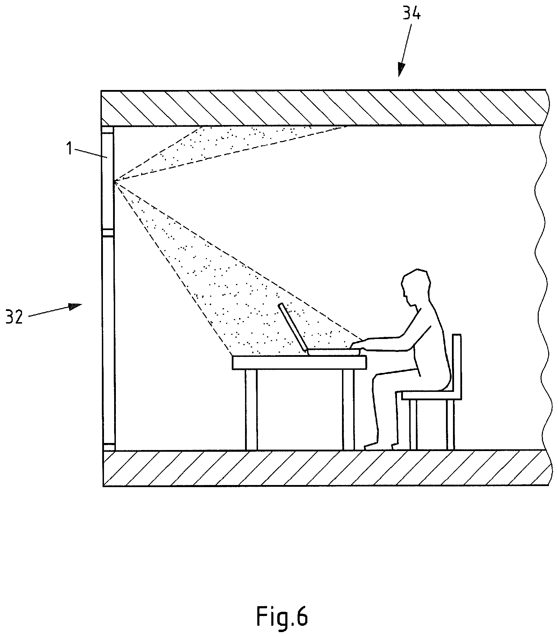

Fig. 6 zeigt schließlich eine Darstellung einer beispielhaften Verwendung der beispielhaften Beleuchtungseinrichtung 1. Die Beleuchtungseinrichtung 1 wird für ein raumbildendes Bauelement, in diesem Fall ein Fenster verwendet. Die Beleuchtungseinrichtung 1 ist dabei in einem oberen Teil eines Fensters 32 eines Raumes 34 vorgesehen. Die Beleuchtungseinrichtung 1 kann ein Teil des Fensters 32 sein oder mittels eines Rahmens vor das Fenster 32 gesetzt werden. Die Beleuchtungsvorrichtung 1 strahlt durch eine am oberen Rand des Lichtleiters angeordnete Beleuchtungsquelle Licht mit einer warmweißen Farbtemperatur und hoher Beleuchtungsstärke (z.B. 1000 lx) schräg nach unten ab. Zusätzlich kann durch eine am unteren Rand des Lichtleiters angeordnete Beleuchtungsquelle helles, kaltes Licht schräg nach oben abstrahlen.

## Patentansprüche

1. Lichtumlenkvorrichtung umfassend:
- einen flächigen, transparenten Lichtleiter (4, 4'), und
- eine zumindest bereichsweise auf den Lichtleiter flächig aufgebrachte, transparente Deckschicht (6, 6'),
wobei zwischen dem Lichtleiter (4, 4') und der Deckschicht (6, 6') eine Mikrostruktur (20, 20`) zur Auskopplung von in den Lichtleiter (4, 4') eingekoppeltem Licht gebildet ist, wobei die Mikrostruktur (20, 20') entweder auf der dem Lichtleiter (4) zugewandten Oberfläche der Deckschicht (6) ausgebildet ist oder durch die Oberfläche des Lichtleiters ausgebildet wird,
**dadurch gekennzeichnet, dass**
die Mikrostruktur (20, 20') eine Vielzahl von Strukturelementen (20a, 20a') aufweist, welche als kreiszylinderförmige Erhebungen (20a, 20a') ausgebildet sind,
wobei der durch die Höhe (h) und die Querschnittsdiagonale (c) der Strukturelemente (20a, 20a') eingeschlossene Winkel kleiner oder gleich dem Grenzwinkel der Totalreflexion in dem Lichtleiter (4) und/oder der Deckschicht (6, 6') ist,
wobei die Strukturelemente (20a, 20a') derart ausgebildet sind, dass in den Lichtleiter (4, 4') eingekoppeltes Licht über die Zylindermantelflächen der Strukturelemente (20a, 20a') ausgekoppelt wird.

2. Lichtumlenkvorrichtung nach Anspruch 1, wobei die der Mikrostruktur (20, 20') gegenüberliegende Oberfläche der Deckschicht (6, 6') im Wesentlichen plan ist.

3. Lichtumlenkvorrichtung nach einem der Ansprüche 1 bis 2, wobei der Lichtleiter (4, 4') zumindest teilweise aus Glas oder einem Kunststoff besteht.

4. Lichtumlenkvorrichtung nach einem der Ansprüche 1 bis 3, wobei die Deckschicht (6, 6') als Folie ausgebildet ist.

5. Lichtumlenkvorrichtung nach einem der Ansprüche 1 bis 4, wobei der Lichtleiter (4, 4') eine Dicke von mindestens 1 mm, bevorzugt mindestens 2 mm, weiter bevorzugt mindestens 3 mm und/oder eine Dicke von höchstens 15 mm, bevorzugt höchstens, 10 mm, weiter bevorzugt höchstens 8 mm aufweist.

6. Lichtumlenkvorrichtung nach einem der Ansprüche 1 bis 5, wobei die Deckschicht (6, 6') zumindest teilweise aus Glas oder einem Kunststoff besteht.

7. Lichtumlenkvorrichtung nach einem der Ansprüche 1 bis 6, wobei die Deckschicht (6, 6') eine Dicke von höchstens 1000 µm, bevorzugt höchstens 500 µm, weiter bevorzugt höchstens 300 µm und/oder eine Dicke von mindestens 50 µm, bevorzugt mindestens 100 µm, weiter bevorzugt mindestens 150 µm aufweist.

8. Lichtumlenkvorrichtung nach einem der Ansprüche 1 bis 7, wobei die Deckschicht (6, 6') stoffschlüssig mit dem Lichtleiter (4, 4') verbunden ist.

9. Lichtumlenkvorrichtung nach einem der Ansprüche 1 bis 8, wobei die Strukturelemente (20a, 20a') der Mikrostruktur (20, 20') eine im Wesentlichen konstante Anordnungsdichte aufweisen.

10. Lichtumlenkvorrichtung nach einem der Ansprüche 1 bis 9, wobei ein der Einkopplung dienender Rand (14, 14a, 14b, 14c, 14d) des Lichtleiters (4, 4') eine Oberflächenmodifikation (24a, 24b, 24c, 24d, 24e, 24f) aufweist.

11. Lichtumlenkvorrichtung nach einem der Ansprüche 1 bis 10, wobei die Mikrostruktur (20, 20') mittels Profilwalzen, insbesondere mittels UV-Prägen mittels einer Prägewalze hergestellt ist.

12. Beleuchtungseinrichtung, umfassend:
- eine Lichtumlenkvorrichtung (2, 2') nach einem der Ansprüche 1 bis 11, und
- eine an einem Rand (14, 14a, 14b, 14c, 14d) des Lichtleiters (4, 4') angeordnete Beleuchtungsquelle (8, 8a, 8b, 8c, 8d) zur Einkopplung von Licht über den Rand (14, 14a, 14b, 14c, 14d) des Lichtleiters (4, 4').

13. Beleuchtungseinrichtung nach Anspruch 12, wobei die Strukturelemente (20a, 20a') der Mikrostruktur (20, 20') zumindest bereichsweise eine mit zunehmendem Abstand von zumindest einer Beleuchtungsquelle (8, 8a, 8b, 8c, 8d) im Wesentlichen zunehmende Anordnungsdichte aufweisen.

14. Beleuchtungseinrichtung nach Anspruch 12 oder 13, wobei die Beleuchtungsquelle (8, 8a, 8b, 8c, 8d) zumindest bereichsweise auf den Rand (14, 14a, 14b, 14c, 14d) des Lichtleiters (4, 4') aufgebracht ist.

15. Beleuchtungseinrichtung nach einem der Ansprüche 12 bis 14, umfassend:
- eine erste an einem ersten Rand (14, 14a, 14b, 14c, 14d) des Lichtleiters (4, 4') angeordnete Beleuchtungsquelle (8, 8a, 8b, 8c, 8d) zur Einkopplung von Licht über den ersten Rand (14, 14a, 14b, 14c, 14d) des Lichtleiters (4, 4'), und
- eine zweite an einem zweiten Rand (14, 14a, 14b, 14c, 14d) des Lichtleiters (4, 4') angeordnete Beleuchtungsquelle (8, 8a, 8b, 8c, 8d) zur Einkopplung von Licht über den zweiten Rand (14, 14a, 14b, 14c, 14d) des Lichtleiters (4, 4').

16. Verwendung einer Lichtumlenkvorrichtung nach einem der Ansprüche 1 bis 11 oder einer Beleuchtungseinrichtung nach einem der Ansprüche 12 bis 15 für ein raumbildendes Bauelement, insbesondere ein Fenster (32), eine Trennwand, eine Brüstung oder ein Deckenelement oder für eine Raumleuchte.

## Claims

1. A light deflection device comprising:
- a planar, transparent light guide (4, 4'), and
- a transparent cover layer (6, 6') applied in a planar manner to the light guide at least in regions,
wherein a microstructure (20, 20') for coupling out light coupled into the light guide (4, 4') is formed between the light guide (4, 4') and the cover layer (6, 6'), wherein the microstructure (20, 20') either is formed on the surface of the cover layer (6) facing the light guide (4) or is formed by the surface of the light guide,
**characterised in that**
the microstructure (20, 20') has a plurality of structural elements (20a, 20a') which are formed as circular cylindrical protrusions (20a, 20a'),
wherein the angle enclosed by the height (h) and the cross-sectional diagonal (c) of the structural elements (20a, 20a') is smaller than or equal to the limiting angle of total reflection in the light guide (4) and/or the cover layer (6, 6'),
wherein the structural elements (20a, 20a') are formed in such a way that light coupled into the light guide (4, 4') is coupled out via the cylinder jacket surfaces of the structural elements (20a, 20a').

2. The light deflection device according to claim 1, wherein the surface of the cover layer (6, 6') opposite the microstructure (20, 20') is substantially planar.

3. The light deflection device according to any one of claims 1 to 2, wherein the light guide (4, 4') is at least partially made of glass or a plastic.

4. The light deflection device according to any one of claims 1 to 3, wherein the cover layer (6, 6') is formed as a foil.

5. The light deflection device according to any one of claims 1 to 4, wherein the light guide (4, 4') has a thickness of at least 1 mm, preferably at least 2 mm, more preferably at least 3 mm and/or a thickness of at most 15 mm, preferably at most 10 mm, more preferably at most 8 mm.

6. The light deflection device according to any one of claims 1 to 5, wherein the cover layer (6, 6') is at least partially made of glass or a plastic.

7. The light deflection device according to any one of claims 1 to 6, wherein the cover layer (6, 6') has a thickness of at most 1000 µm, preferably at most 500 µm, more preferably at most 300 µm and/or a thickness of at least 50 µm, preferably at least 100 µm, more preferably at least 150 µm.

8. The light deflection device according to any one of claims 1 to 7, wherein the cover layer (6, 6') is connected to the light guide (4, 4') in a materially bonded manner.

9. The light deflection device according to any one of claims 1 to 8, wherein the structural elements (20a, 20a') of the microstructure (20, 20') have a substantially constant arrangement density.

10. The light deflection device according to any one of claims 1 to 9, wherein an edge (14, 14a, 14b, 14c, 14d) of the light guide (4, 4') serving for coupling in has a surface modification (24a, 24b, 24c, 24d, 24e, 24f).

11. The light deflection device according to any one of claims 1 to 10, wherein the microstructure (20, 20') is produced by means of profile rolling, in particular by means of UV embossing using an embossing roller.

12. A lighting equipment comprising:
- a light deflection device (2, 2') according to any one of claims 1 to 11, and
- a lighting source (8, 8a, 8b, 8c, 8d) arranged at an edge (14, 14a, 14b, 14c, 14d) of the light guide (4, 4') for coupling in light via the edge (14, 14a, 14b, 14c, 14d) of the light guide (4, 4').

13. The lighting equipment according to claim 12, wherein the structural elements (20a, 20a') of the microstructure (20, 20') have, at least in regions, an arrangement density which substantially increases with increasing distance from at least one lighting source (8, 8a, 8b, 8c, 8d).

14. The lighting equipment according to claim 12 or 13, wherein the lighting source (8, 8a, 8b, 8c, 8d) is applied to the edge (14, 14a, 14b, 14c, 14d) of the light guide (4, 4') at least in regions.

15. The lighting equipment according to any one of claims 12 to 14, comprising:
- a first lighting source (8, 8a, 8b, 8c, 8d) arranged at a first edge (14, 14a, 14b, 14c, 14d) of the light guide (4, 4') for coupling in light via the first edge (14, 14a, 14b, 14c, 14d) of the light guide (4, 4'), and
- a second lighting source (8, 8a, 8b, 8c, 8d) arranged at a second edge (14, 14a, 14b, 14c, 14d) of the light guide (4, 4') for coupling in light via the second edge (14, 14a, 14b, 14c, 14d) of the light guide (4, 4').

16. Use of a light deflection device according to any one of claims 1 to 11 or of a lighting equipment according to any one of claims 12 to 15 for a space-forming structural element, in particular a window (32), a partition, a parapet or a ceiling element or for a room luminaire.

## Revendications

1. Dispositif de déviation de lumière comprenant :
- un guide de lumière plat et transparent (4, 4'), et
- une couche de couverture (6, 6') transparente, appliquée à plat au moins par zones sur le guide de lumière,
une microstructure (20, 20') étant formée entre le guide de lumière (4, 4') et la couche de couverture (6, 6') pour éjecter lumière injectée dans le guide de lumière (4, 4'), la microstructure (20, 20') étant soit formée sur la surface de la couche de couverture (6) tournée vers le guide de lumière (4), soit formée par la surface du guide de lumière,
**caractérisé en ce que**
la microstructure (20, 20') comprend une pluralité d'éléments de structure (20a, 20a') qui sont réalisés en forme d'élévations cylindriques circulaires (20a, 20a'), l'angle formé par la hauteur (h) et la diagonale de la section transversale (c) des éléments de structure (20a, 20a') étant inférieur ou égal à l'angle limite de la réflexion totale dans le guide de lumière (4) et/ou la couche de couverture (6, 6'), les éléments de structure (20a, 20a') étant conçus de telle sorte que la lumière injectée dans le guide de lumière (4, 4') est éjectée par les surfaces d'enveloppe cylindrique des éléments de structure (20a, 20a').

2. Dispositif de déviation de lumière selon la revendication 1, dans lequel la surface de la couche de couverture (6, 6') opposée à la microstructure (20, 20') est essentiellement plane.

3. Dispositif de déviation de lumière selon l'une quelconque des revendications 1 à 2, dans lequel le guide de lumière (4, 4') est constitué au moins partiellement de verre ou d'une matière plastique.

4. Dispositif de déviation de lumière selon l'une quelconque des revendications 1 à 3, dans lequel la couche de couverture (6, 6') est réalisée en forme de film.

5. Dispositif de déviation de lumière selon l'une quelconque des revendications 1 à 4, dans lequel le guide de lumière (4, 4') présente une épaisseur d'au moins 1 mm, préférentiellement d'au moins 2 mm, plus préférentiellement d'au moins 3 mm et/ou une épaisseur d'au plus 15 mm, préférentiellement d'au plus 10 mm, plus préférentiellement d'au plus 8 mm.

6. Dispositif de déviation de lumière selon l'une quelconque des revendications 1 à 5, dans lequel la couche de couverture (6, 6') est constituée au moins partiellement de verre ou d'une matière plastique.

7. Dispositif de déviation de lumière selon l'une quelconque des revendications 1 à 6, dans lequel la couche de couverture (6, 6') présente une épaisseur d'au plus 1000 µm, préférentiellement d'au plus 500 µm, plus préférentiellement d'au plus 300 µm et/ou une épaisseur d'au moins 50 µm, préférentiellement d'au moins 100 µm, plus préférentiellement d'au moins 150 µm.

8. Dispositif de déviation de lumière selon l'une quelconque des revendications 1 à 7, dans lequel la couche de couverture (6, 6') est reliée au guide de lumière (4, 4') par liaison de matière.

9. Dispositif de déviation de lumière selon l'une quelconque des revendications 1 à 8, dans lequel les éléments structuraux (20a, 20a') de la microstructure (20, 20') présentent une densité d'agencement essentiellement constante.

10. Dispositif de déviation de lumière selon l'une quelconque des revendications 1 à 9, dans lequel un bord (14, 14a, 14b, 14c, 14d) du guide de lumière (4, 4') servant à l'injection présente une modification de surface (24a, 24b, 24c, 24d, 24e, 24f).

11. Dispositif de déviation de lumière selon l'une quelconque des revendications 1 à 10, dans lequel la microstructure (20, 20') est produit par roulage de profil, en particulier par gaufrage aux UV au moyen d'un rouleau de gaufrage.

12. Équipement d'éclairage, comprenant
- un dispositif de déviation de lumière (2, 2') selon l'une quelconque des revendications 1 à 11, et
- une source d'éclairage (8, 8a, 8b, 8c, 8d) disposée sur un bord (14, 14a, 14b, 14c, 14d) du guide de lumière (4, 4') pour injecter lumière via le bord (14, 14a, 14b, 14c, 14d) du guide de lumière (4, 4').

13. Équipement d'éclairage selon la revendication 12, dans lequel les éléments structurels (20a, 20a') de la microstructure (20, 20') présentent, au moins par zones, une densité d'agencement qui essentiellement augmente avec l'augmentation de la distance par rapport à au moins une source d'éclairage (8, 8a, 8b, 8c, 8d).

14. Équipement d'éclairage selon la revendication 12 ou 13, dans lequel la source d'éclairage (8, 8a, 8b, 8c, 8d) est appliquée au moins par zones sur le bord (14, 14a, 14b, 14c, 14d) du guide de lumière (4, 4').

15. Équipement d'éclairage selon l'une quelconque des revendications 12 à 14, comprenant :
- une première source d'éclairage (8, 8a, 8b, 8c, 8d) disposée sur un premier bord (14, 14a, 14b, 14c, 14d) du guide de lumière (4, 4') pour injecter lumière via le premier bord (14, 14a, 14b, 14c, 14d) du guide de lumière (4, 4'), et
- une deuxième source d'éclairage (8, 8a, 8b, 8c, 8d) disposée sur un deuxième bord (14, 14a, 14b, 14c, 14d) du guide de lumière (4, 4') pour injecter lumière via le deuxième bord (14, 14a, 14b, 14c, 14d) du guide de lumière (4, 4').

16. Utilisation d'un dispositif de déviation de lumière selon l'une quelconque des revendications 1 à 11 ou d'un équipement d'éclairage selon l'une quelconque des revendications 12 à 15 pour un élément de construction formant un espace, en particulier une fenêtre (32), une cloison, un parapet ou un élément de plafond, ou pour un luminaire d'ambiance.
